# EUROPEAN PATENT SPECIFICATION

(11) **EP 1 688 883 B1**
(45) Date of publication and mention of the grant of the patent: **01.04.2009**
(21) Application number: 06009674.0
(22) Date of filing: 09.12.2003
(51) Int. Cl.: G06T 7/40

(54) **Image correction apparatus and image pickup apparatus**
Bildkorrekturvorrichtung und Bildaufnahmevorrichtung
Appareil de correction de l'image et appareil de capture d'images

(30) Priority: 11.12.2002 JP 2002359669; 11.12.2002 JP 2002359679; 12.11.2003 JP 2003382516; 14.11.2003 JP 2003385084
(43) Date of publication of application: 09.08.2006
(62) Divisional of application: 03028226.3
(73) Proprietor: FUJIFILM Corporation, Minato-ku Tokyo (JP)
(72) Inventor: Kaku, Toshihiko c/o Fuji Photo Film Co., Ltd., Ashigarakami-gun Kanagawa 258-8538 (JP)
(74) Representative: Klunker . Schmitt-Nilson . Hirsch

(56) References cited:
- EP-A- 0 107 083
- WO-A-01/57683
- US-A- 6 009 209
- US-A1- 2002 109 854
- US-A1- 2002 122 588
- US-A1- 2002 122 588
- US-B1- 6 407 777
- PATENT ABSTRACTS OF JAPAN vol. 2000, no. 14, 5 March 2001 (2001-03-05) -& JP 2000 305141 A (OLYMPUS OPTICAL CO LTD), 2 November 2000 (2000-11-02)
- GAUBATZ M ET AL: "Automatic red-eye detection and correction" PROCEEDINGS 2002 INTERNATIONAL CONFERENCE ON IMAGE PROCESSING. ICIP 2002. ROCHESTER, NY, SEPT. 22 - 25, 2002, INTERNATIONAL CONFERENCE ON IMAGE PROCESSING, NEW YORK, NY: IEEE, US, vol. 2 OF 3, 22 September 2002 (2002-09-22), pages 804-807, XP010607446 ISBN: 0-7803-7622-6
- CAMUS T A ET AL: "Reliable and fast eye finding in close-up images" PATTERN RECOGNITION, 2002. PROCEEDINGS. 16TH INTERNATIONAL CONFERENCE ON QUEBEC CITY, QUE., CANADA 11-15 AUG. 2002, LOS ALAMITOS, CA, USA,IEEE COMPUT. SOC, US, vol. 1, 11 August 2002 (2002-08-11), pages 389-394, XP010613355 ISBN: 0-7695-1695-X
- HARO A ET AL: "DETECTING AND TRACKING EYES BY USING THEIR PHYSIOLOGICAL PROPERTIES, DYNAMCICS, AND APPEARANCE" PROCEEDINGS 2000 IEEE CONFERENCE ON COMPUTER VISION AND PATTERN RECOGNITION. CVPR 2000. HILTON HEAD ISLAND, SC, JUNE 13-15, 2000, PROCEEDINGS OF THE IEEE COMPUTER CONFERENCE ON COMPUTER VISION AND PATTERN RECOGNITION, LOS ALAMITOS, CA : IEEE COMP. SO, vol. VOL. 1 OF 2, 13 June 2000 (2000-06-13), pages 163-168, XP001035597 ISBN: 0-7803-6527-5
- PATENT ABSTRACTS OF JAPAN vol. 2000, no. 04, 31 August 2000 (2000-08-31) -& JP 2000 011140 A (FUJI PHOTO FILM CO LTD), 14 January 2000 (2000-01-14)
- KHAN S.A.: "Character Segmentation Heuristics for Check Amount Verification" MIT, 26 May 1998 (1998-05-26),

## Description

### BACKGROUND OF THE INVENTION

### Field of the Invention

The present invention relates to an image correction apparatus according to the preamble of claim 1 and an image pickup apparatus comprising such correction apparatus for detecting a particular eye-related defect, such as red-eyes and gold-eyes, in an image, and correcting the defect.

### Description of the Related Art

Traditionally, there has been known a camera provided with a flashing device with an emitting section which emits a flash. Eyes of persons and animals have a structure in which, at a dark place, pupils are opened large so that more light can be introduced thereinto. Therefore, when a person or animal with the pupils opened large is photographed at a dark place with the use of a flashing device provided for a camera, a flash emitted by the emitting section of the flashing device may enter the eyeballs through the widely opened pupils and reflected by capillaries of retinae covering the internal surface of the eyeballs, and as a result, a so-called red-eye phenomenon may be caused, in which the pupils of the person or animal are reproduced in red. There may also be a case where, when a picture is taken with the use of a flashing device provided for a camera, a so-called gold-eye phenomenon may be caused, in which pupils of a person or animal may be reproduced as whitish ones due to reflection of a flash by the sclerae or corneae covering the outermost layer of the eyeballs, depending on the incidence with which the flash emitted by the flashing device enters.

With the recent development of digital processing techniques, there have been proposed an image processing apparatus or an electronic camera that acquires image data representing a picture in which the pupils of a person or animal are reproduced in red or reproduced as whitish ones, detects red-eye portions and gold-eye portions in an image represented by the acquired image data, and corrects the detected red-eye portions and gold-eye portions (see Patent Document: Japanese Patent Laid-Open No. 2000-305141 for example).

The electronic camera proposed in the above-mentioned patent document, which focuses an image of a photographed object onto a charge coupled device (CCD) solid-state image pickup element to acquire image data representing the photographed object as a signal, is provided with a function of an image processing apparatus of detecting red-eye portions in an image of a photographed person or animal to correct the detected red-eye portions. Furthermore, the electronic camera proposed in the above-mentioned patent document is provided with an image display device for displaying an image, and there is displayed an image, in which eyes of a person or animal are reproduced as red-eyes, on the image display device when red-eye portions are detected. Based on the display, the user, such as the photographer of the image, confirms the red-eye portions in the image acquired by photographing and determines whether or not to correct the red-eye portions. When correction of the red-eye portions is specified as a result of the determination, there is displayed an image in which the red-eye portions have been corrected on the image display device, and thereby the user confirms whether or not the correction has been accurately performed.

Thus, in the electronic camera proposed in the above-mentioned patent document, the user is required to perform confirmation twice, that is, when the red-eye portions have been detected and when the detected red-eye portions have been corrected. This is troublesome and time-consuming for the user.

The screen of an image display device provided for an electronic camera is generally small. It is difficult to visually confirm red-eye portions using the image display device with such a small screen and the red-eye portions may be overlooked.

As means for solving these problems, there is known means for facilitating visual confirmation of red-eye portions by zooming red-eye portions in an image displayed on the image display device. However, in the case of an image in which multiple eyes are reproduced as red-eyes, the confirmation work is troublesome.

The above problems are not limited to the filed of cameras and photographs and are generally caused in the image processing field, for example, in the case of performing image processing for any image such as an image acquired from the Web.

In accordance with the preamble of claim 1, JP2000305141 discloses an image correction apparatus. Also in this prior art apparatus, it is difficult for a photographer to see whether and/or where defects have been detected. Similar apparatuses are known from US-6 009 209 and US-6 407 777.

### SUMMARY OF THE INVENTION

The invention is defined by the appended claims. In consideration of the above situation, the object of the present invention is to provide an image correction apparatus and an image pickup apparatus that enable a particular eye-related defect, such as red-eye portions and gold-eye portions in an image, to be easily confirmed.

This is achieved by the features of claim 1 and claim 7, respectively.

The image correction apparatus of the present invention detects an eye-related defect in an image, corrects the detected defect and displays a corrected image in which the defect has been corrected. Therefore, the detected defect and the corrected defect can be confirmed with the use of the corrected image simultaneously at one time, and confirmation of the eye-related defect in the image can be realized by an easy operation.

In the image correction apparatus of the present invention, it is preferable that the correction section not only detects the defect in the image but also prioritizes the positions at which the defect has been found based on a predetermined criterion; and that
the image display section, when displaying the corrected image, displays in preference an image portion from a position to which a higher priority has been given by the correction section.

For example, by giving a higher priority to a photographed object located in the center of the angle of view or photographed with the face portion zoomed and giving a lower priority to other photographed objects, it is possible to confirm a main photographed object in preference and omit the confirming of unnecessary photographed objects such as passers-by.

In the image correction apparatus of the present invention, the image display section, when displaying the corrected image, displays a list consisting of the image portions from the positions at which the defect has been detected by the correction section.

By displaying the list of the image portions from the positions at which the defect has been detected, the positions at which the defect has been detected can be confirmed at a time.

In the correction apparatus of the present invention, it is preferable that the image display section, when displaying the corrected image, displays a normal image in which none of the positions at which the defect has been detected by the correction section is zoomed and a zoomed image in which one of the positions is zoomed.

The preferable image correction apparatus makes it possible to confirm details and locations of the positions at which a defect has been detected while confirming the whole normal image.

It is preferable that the image correction apparatus of the present invention is provided with a correction deletion section that restores the defect corrected by the correction section, in the corrected image displayed by the image display section, to the original condition held before the defect is corrected by the correction section.

The image correction apparatus provided with such a correction deletion section can restore the corrected image to the original condition before a defect was corrected when detection or correction of the defect by the correction section is inappropriate.

In the image correction apparatus of the present invention, it is also preferable that the image display section, when displaying the corrected image, emphasizes the defect corrected by the correction section.

If the eye-related defect in the corrected image is emphasized, the eye-related defect in the image can be confirmed more easily.

In the image correction apparatus of the present invention, it is more preferable that the correction section detects red-eye portions in the image and corrects the detected red-eye portions; and that
the image display section, when the image data is acquired by the image acquisition section, displays a corrected image in which the red-eye portions have been corrected by the correction section.

Though red-eye gives a psychologically uncomfortable feeling especially strongly among particular eye-related defects, the red-eyes are difficult to visually recognize. Therefore, such an image correction apparatus that facilitates confirmation of correction of red-eye portions in an image is especially useful.

The image pickup apparatus of the present invention comprises the features of claim 7.

As described above, the screen of an image display device provided for an image pickup apparatus is generally small. However, if an image pick apparatus detects an eye-related defect in a photographed object image, corrects the detected defect, and displays the image in which the defect has been corrected, as the second image pickup apparatus of the present invention, it is possible to confirm the detected defect and the corrected defect simultaneously at one time with the use of the corrected image. Furthermore, though operationality of switches provided for an image pickup apparatus are generally not good, red-eye portions are confirmed with the use of the corrected image in which the defect has been corrected, in the second image pickup apparatus of the present invention, and accordingly, the number of operations for confirmation is reduced, and therefore the defect in eyes in an image can be easily confirmed even with a low-operationality switch.

### BRIEF DESCRIPTION OF THE DRAWINGS

Fig. 1 is an external perspective view of a camera according to a first embodiment of the present invention when it is seen obliquely downwardly from the front;
Fig. 2 is an external perspective view of the camera shown in Fig. 1 when it is seen obliquely downwardly from the back;
Fig. 3 is a configuration block diagram of a signal processing section arranged inside the camera shown in Figs. 1 and 2;
Fig. 4 is a flowchart showing an operational flow when a "first automatic red-eye correction processing" mode is selected;
Fig. 5 shows an example of an image photographed at step S101;
Fig. 6 shows a display example wherein there are displayed a red-eye corrected image for which an automatic red-eye correction processing has been performed at step S104 and the number of unconfirmed positions on a LCD panel;
Fig. 7 shows display examples different from Fig. 6, wherein there are displayed a red-eye corrected image and the number of unconfirmed positions;
Fig. 8 shows a display example wherein there is displayed a red-eye corrected image, on which a face can be selected with a cross key at step S106, on a LCD panel;
Fig. 9 shows display examples different from Fig. 8 wherein there are displayed red-eye corrected images on which a face can be selected at step S106;
Fig. 10 shows a display example wherein a face zoomed at step S107 is displayed on a LCD panel;
Fig. 11 shows display examples different from Fig. 10 wherein a zoomed face is displayed;
Fig. 12 shows a display example wherein an eye portion zoomed at step S109 is displayed on a LCD panel;
Fig. 13 is a flowchart showing an operational flow when a "second automatic red-eye correction processing" mode is selected;
Fig. 14 shows a display example wherein there are displayed a red-eye corrected image for which automatic red-eye correction processing is performed at step S204 and the number of detections on a LCD panel;
Fig. 15 shows a display example wherein a face zoomed at step S207 and the number of unconfirmed positions are displayed on a LCD panel;
Fig. 16 shows a display example wherein an eye portion zoomed at S209 and the number of unconfirmed positions are displayed on a LCD panel;
Fig. 17 is a flowchart showing a series of processings from photographing of an object with a camera according to a second embodiment to storage of a photographed image; and
Fig. 18 is a flowchart showing a series of processings from photographing of an object with a camera according to a third embodiment to storage of a photographed image.

### DETAILED DESCRIPTION OF THE PREFERRED EMBODIMENTS

Embodiments according to the present invention will be described below.

There will be described embodiments wherein the present invention is applied to an electronic camera in which an image of a photographed object is focused on a charge coupled device (CCD) solid-state image pickup element to acquire image data representing the photographed object as a signal.

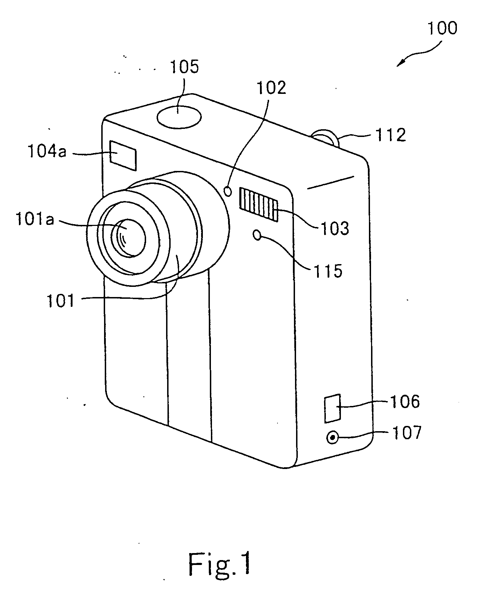

Fig. 1 is an external perspective view of an electronic camera according to one embodiment of the present invention when it is seen obliquely downwardly from the front. A general configuration of an electronic camera will be described first with reference to Figs. 1 to 3. An electronic camera according to this embodiment as the present invention is characterized in the processing operation in a "first automatic red-eye correction processing" mode and a "second automatic red-eye correction processing" mode, which is to be described later in detail.

A camera 100 shown in Fig. 1 is a camera for photographing a picture onto a photograph film not shown.

At the front of the camera 100, there is provided a lens barrel 101 with an image taking lens 101a provided therein. The image taking lens 101a focuses the light of a photographed object incident thereto, onto the photographing surface of a CCD solid-state image pickup element (not shown) arranged inside the camera, and image data representing the photographed object is generated by the CCD solid-state image pickup element.

At the front of the camera 100, there are provided a flash emitting device 103, a dimming sensor 102 for measuring the quantity of light emitted by the flash emitting device 103, a self timer LED 115 for lighting up to inform start of photographing to an object to be photographed, and an optical finder objective window 104a to be looked into by a photographer to determine the position of the object to be photographed. The flash emitting device 103 is an example of a flash emitting section according to the present invention.

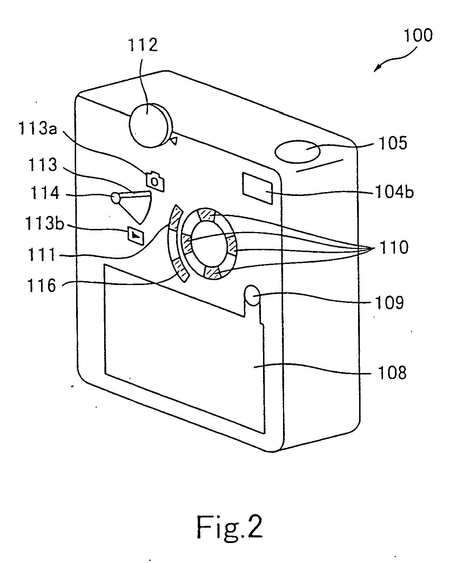

At the right end on the upper surface of the camera 100, there is provided a shutter release button 105 to be pressed down when performing photographing. A photographing mode dial 112 provided at the upper part of the back surface will be described with reference to Fig. 2.

At the lower part of the left side surface of the camera 100, there are provided a universal serial bus (USB) terminal 106 into which a USB cable used for sending image data acquired by photographing to a personal computer is connected, and a power source input terminal 107 into which a power source cable used for supplying an external power to the camera 100 in that order from above.

Fig. 2 is an external perspective view of the camera shown in Fig. 1 when it is seen obliquely downwardly from the back.

At the back surface of the camera 100, there are provided an optical finder eyepiece window 104b, a liquid crystal display (LCD) panel 108 for displaying image and a date and time, a LCD panel activation button 109 for turning on/off image display on ' the LCD panel 108, a cross key 110 to be operated when selecting a variation or zooming, a menu/OK switch 111 to be used when displaying a menu for setting, for example, a date or a date and time on the LCD panel 108 or determining the setting of the menu, a cancellation switch 116 to be used when canceling the setting changed by various operations, the photographing mode dial 112 to be used when selecting various modes, which will be described later, a function selection lever 113 to be used when selecting either a "photographing record" function for photographing or an "image data reproduction" function for reproducing image data photographed and recorded, and a main switch 114 provided on the shaft of the function selection lever 113. In the camera 100, a "first automatic red-eye correction processing" mode or a "second automatic red-eye correction processing" mode can be selected based on the operation of the cross key 110, in which a red-eye portion in a photographed object image is detected and the detected red-eye portion is corrected. The "first automatic red-eye correction processing" mode and the "second automatic red-eye correction processing" mode will be described in detail later. The LCD panel 108 is an example of each of an image display section and a warning section according to the present invention.

In the camera 100, the "photographing record" function is selected by moving the function selection lever 113 to the "photographing record" side 113a, and the "image data reproduction" function is selected by moving the function selection lever 113 to the "image data preproduction" side 113b. When the "photographing record" function is selected by the function selection lever 113, any of the followings can be selected by turning the photographing mode dial 112: a "person photographing" mode suitable for photographing a person, a "scenery photographing" mode suitable for photographing scenery, a "sports" mode suitable for photographing an object moving fast, a "self timer" mode that gives time difference after the shutter release button 105 is pressed down until photographing is actually performed, and a "self photographing" mode suitable for photographing the photographer himself. When no mode is selected, the "person photographing" mode is regarded as being selected when photographing is performed.

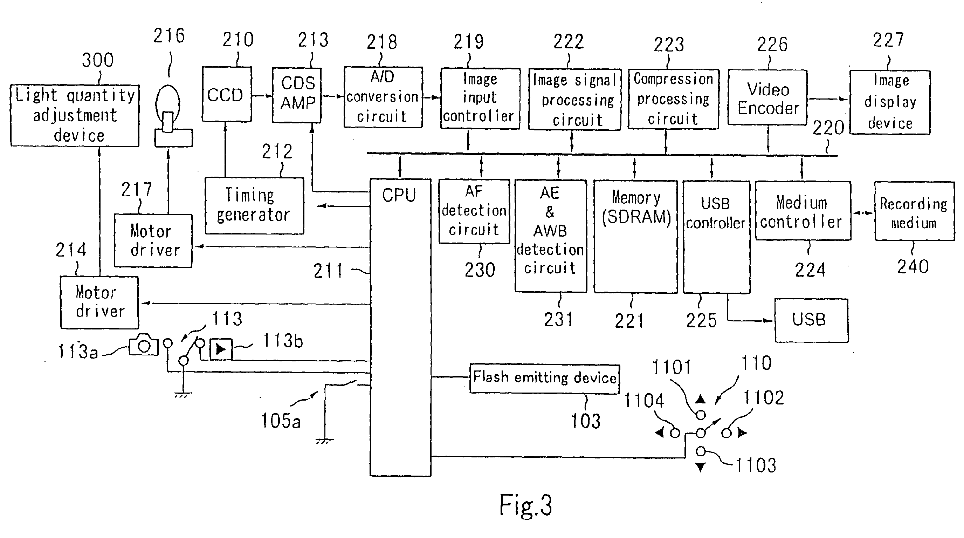

Fig. 3 is a configuration block diagram of a signal processing section arranged inside the camera shown in Figs. 1 and 2.

The configuration of the signal processing section arranged in the camera 100 will be now described with reference to the configuration block diagram shown in Fig. 3.

All processings are controlled by a CPU 211 in the camera 100 shown in Figs. 1 and 2. The CPU 211 is an example of each of a photographing condition acquisition section and a control section according to the present invention.

Description will be made on various switches first.

The shutter release button 105 (see Figs. 1 and 2) which directs start of photographing is provided with a shutter switch 105a which operates in synchronization with the shutter release button 105 being pressed down. An on/off signal of the shutter switch 105a is inputted into the CPU 211. The CPU 211 receives the on signal of the shutter switch 105a as a signal of starting photographing. At this point of time, the function selection lever 113 has been shifted to the "photographing record" side 113a and it has been detected by the CPU 211 that photographing is to be performed.

Any one of multiple items in a selection menu displayed on the LCD panel 108 can be selected with the cross key 110. Fig. 3 shows contact points 1101 to 1104 of the cross key 110. For example, when the contact point 1101 is pressed down, the cursor moves upward. When the contact point 1102 is pressed down, the cursor moves to the right. When any of the contact points 1101 to 1104 is connected and an on/off signal is inputted into the CPU 211, the CPU 211, based on the movement direction, transfers a direction to move the cursor to the LCD panel 108 via a bus 220. The cursor then moves to any of the displayed multiple items. Thus, the user can select any of the multiple items in the selection menu with the cross key 110 based on the cursor displayed on the LCD panel 108. In this case, if electronic zooming is selected, a partial area within the angle of view is cut out and electronically zoomed, with the center of the object to be photographed as the center for the cutting-out and zooming. It is also possible to specify the size of the area to be cut out.

When the function selection lever 113 is shifted to the "image data production" side 113b, reproduction from a recording medium 240 is performed. In this case, even if a signal to direct photographing is inputted from the shutter switch 105a and the like, no processing is performed.

Description will be now made on various elements other than the switches.

In addition to the various switches described above, the flash emitting device 103 shown in Fig. 1, a timing generator 212, a motor driver 217 for driving a focus lens 216, a motor driver 214 for driving a motor provided in a light quantity adjustment device 300, and a CDSAMP 213 are connected to the CPU 211.

When the user performs photographing, an image of an object to be photographed is displayed on the LCD panel 108 as it is moving. Watching the image of the object to be photographed, the user performs framing and presses the shutter release button 105 to perform photographing. In this case, by the shutter switch 105a, which operates in synchronization with the shutter release button 105, being turned on, the CPU 211 recognizes that a direction to start photographing has been sent by the user. In response to this, the CPU 211 outputs a signal to direct emission to the flash emitting device 103 and outputs a signal to direct start of photographing to the timing generator 212. The flash emitting device 103 emits a flash in response to the emission direction. Receiving the direction to start photographing, the timing generator 212 supplies a signal to a CCD solid-state image pickup element 210, informing that the shutter release button 105 has been pressed down. Receiving this signal, the CCD solid-state image pickup element 210 outputs image data photographed by the CCD solid-state image pickup element 210 when the shutter release button 105 was pressed down as an RGB signal. The RGB signal read from the CCD solid-state image pickup element 210 includes a lot of noises, and therefore the CPU 211 also outputs a timing signal for performing a noise reduction processing to the CDSAMP 213 in order to reduce the noises.

There have been described signals outputted by the CPU 211 in response to an input signal from the various switches shown in Figs. 1 and 2.

It will be now described how a photographing signal photographed by the CCD solid-state image pickup element 210 is processed in the order of steps.

Description will be made on the case where the shutter release button 105 is pressed down when the function selection lever 113 shown in Fig. 2 is on the "photographing record" side 113a.

When the function selection lever 113 connected to the CPU 211 is on the "photographing record" side 113a, if the shutter release button 105 is pressed down, the shutter switch 105a is connected and the CPU 211 detects that the shutter release button 105 has been pressed down. In this way, when the user presses down the shutter release button 105, the CPU 211 directs the timing generator 212 to start photographing. Receiving the starting direction, the CCD solid-state image pickup element 210 outputs an RGB signal.

Even when the shutter release button is not pressed down, there is always displayed an object at which the image taking lens is pointed, on the LCD panel 108 of an image display device 227. The displayed object is acquired by converting image data consisting of an RGB signal, which is read from the CCD solid-state image pickup element 210 at predetermined time intervals, into a YC signal by the image signal processing circuit 222 and supplying the YC signal to the image display device 227 via a video encoder 226. While such an object image is displayed, exposure is continuously adjusted by an AE & AWB detection circuit 231 and contrast is continuously detected by an AF detection circuit 230. The image signal processing circuit 222 is an example of the function of a correction section, a correction cancellation section and a confirmation section according to the present invention, and detects and corrects red-eye portions in a photographed image when photographing is performed, as described later. The combination of the CPU 211 and the image signal processing circuit 222 is an example of each of a presumption section and a defect detection section according to the present invention.

As for exposure adjustment, exposure is adjusted by the AE & AWB detection circuit 231 based on brightness information in the RGB signal read from the CCD solid-state image pickup element 210 at predetermined time intervals. When exposure is adjusted by the AE & AWB detection circuit 231, the result is sent to the CPU 211. The CPU 211 gives a direction to the motor driver 214 based on the result, and the motor provided in the light quantity adjustment device 300 is driven so that the quantity of light required for appropriate exposure can be obtained. (Hereinafter, the series of processings beginning with the acquisition of the brightness information until the light quantity adjustment device 300 is adjusted to an appropriate exposure is referred to as an exposure processing.) As for focus adjustment, the focus lens 216 is moved by the AF detection circuit 230 and contrast of the RGB signal is detected by the AF detection circuit 230 at predetermined time intervals to perform focus adjustment. When contrast is detected by the AF detection circuit 230, the result is sent to the CPU 211. The CPU 211 directs the motor driver 217 to drive the focus lens 216 based on the result, and the focus lens 216 is driven to the focused position at which the detected contrast is maximized. (Hereinafter, the series of processings beginning with the detection of contrast until the focus lens 216 is arranged at the focused position is referred to as a focusing processing.) When the focus lens 216 is arranged at the focused position, the CPU 211 supplies an image acquisition signal to the timing generator 212, the timing generator 212 supplies a photographing start signal to the CCD solid-state image pickup element 210, and electric charge accumulated in the CCD solid-state image pickup element 210 is read on the side of the CDSAMP 213 as an RGB signal in response to a read signal of the timing generator 212.

At the CDSAMP 213 to which the read RGB signal has been supplied, a noise reduction processing is performed, and the noise-reduced RGB signal is supplied to an A/D conversion circuit 218. At the A/D conversion circuit 218, the analog RGB signal is A/D converted into a digital RGB signal.

The CPU 211 is connected with an image input controller 219, a memory (SDRAM) 221, the image signal processing circuit 222, a compression processing circuit 223, a medium controller 224, a USB controller 225, the video encoder 226, the AF detection circuit 230 and the AE & AWB detection circuit 231 via the bus 220, and addresses and data are sent and received via the bus 220. There are provided various registers for sending and receiving data via the bus 220, in the CPU 211, and the contents of these registers are rewritten as the processing by each processing section progresses. The CPU 211 reads the contents of the registers and performs processings.

The RGB signal converted into a digital signal is led to the bus 220 by the image input controller 219, controlled by the CPU 211, and written in the memory (SDRAM) 221. The image input controller 219 is an example of an image acquisition section of the present invention. When acquisition of the RGB signal is completed, the RGB signal is then read from the memory (SDRAM) 221 and supplied to the image signal processing circuit 222 via the bus 220. At the image signal processing circuit 222, the RGB signal is converted into a YC signal, and image data compressed by the compression processing circuit 223 is recorded into the recording medium 240 as a JPEG file via the medium controller 224.

The camera shown in Figs. 1 and 2 is also provided with the USB controller 225 and configured to be connectable with USB-based external equipment.

There has been described a flow of image data until it is recorded to the recording medium 240 when photographing is performed in the camera 100 shown in Figs. 1 and 2.

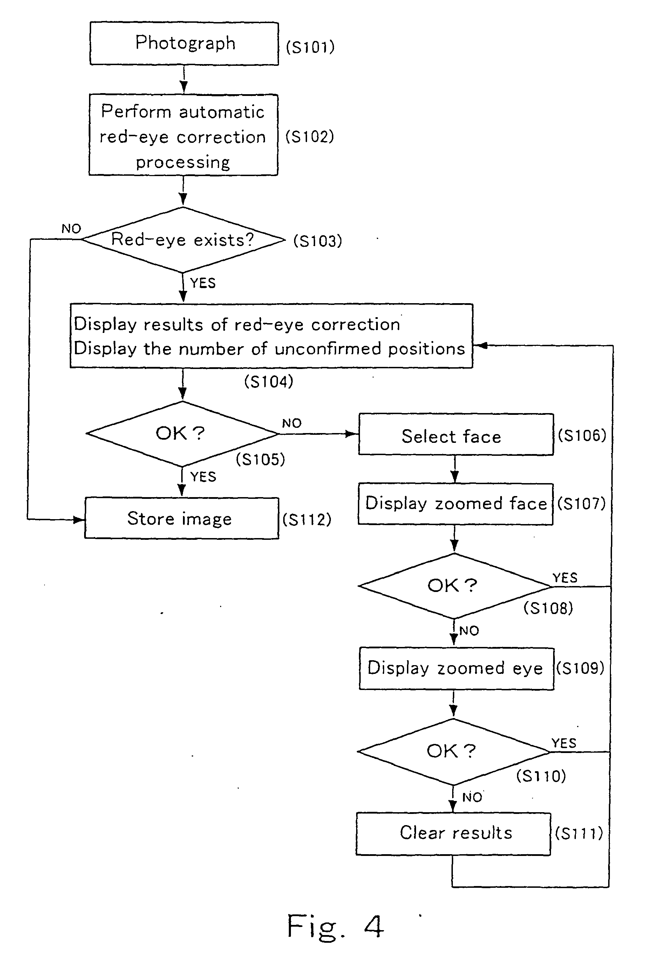

Fig. 4 is a flowchart showing an operational flow when a "first automatic red-eye correction processing" mode is selected.

First, by selecting the "photographing record" function by moving the function selection lever 113 shown in Fig. 2 to the "photographing record" side 113a, selecting a desired photographing mode by turning the photographing mode dial 112, selecting the "first automatic red-eye correction processing" mode based on the operation with the cross key 110; and then pressing down the shutter release button 105, photographing is performed (step S101).

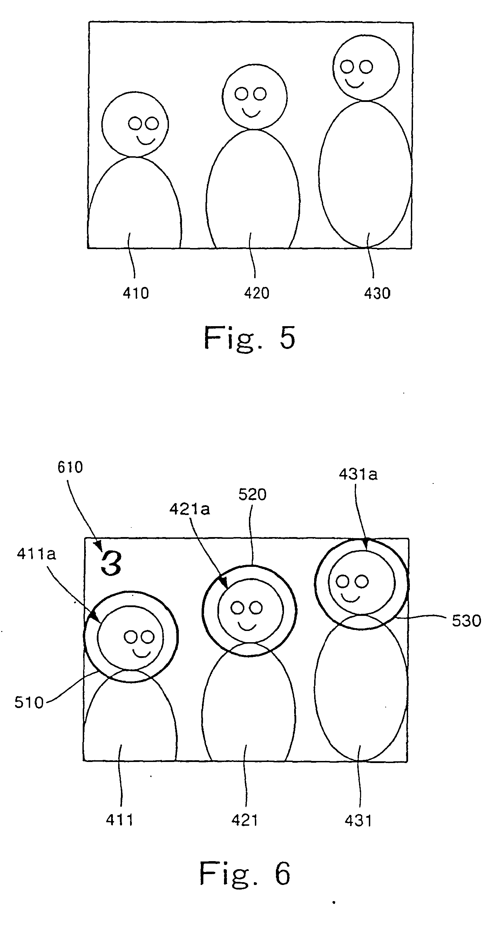

Fig. 5 shows an example of an image photographed at step S101.

There is shown an example of a photographed image with three persons 410, 420 and 430, which has been photographed by selecting the "person photographing" mode with the photographing mode dial 112 shown in Fig. 2, selecting the "first automatic red-eye correction processing" mode based on the operation with the cross key 110, and then pressing down the shutter release button 105.

Since the "first automatic red-eye correction processing" mode is selected based on the operation with the cross key 110 shown in Fig. 2, an automatic red-eye correction processing is started for detecting red-eye portions in the image photographed and acquired at step S101 and correcting the detected red-eye portions (step S102).

If red-eye portions have been detected as a result of the detection of red-eye portions in the photographed image performed at step S102 (step S103: YES), then the number of unconfirmed positions, which is the number of persons who have not been confirmed by a confirmation operation to be described later, among the persons on which a red-eye portion has been detected, is displayed together with a red-eye corrected image for which the automatic red-eye correction processing has been performed on the LCD panel 108 shown in Fig. 2 (step S104). In this case, the number of unconfirmed positions is an example of the number of positions according to the present invention.

If there is no red-eye portion detected in the detection of red-eye portions in the photographed image performed at step S102 (step S103: NO), then image data representing the photographed image is recorded to the recording medium 240 as a JPEG file via the medium controller 224 shown in Fig. 3 (step S112).

Fig. 6 shows a display example wherein there are displayed a red-eye corrected image for which the automatic red-eye correction processing has been performed at step S104 and the number of unconfirmed positions on a LCD panel.

There is shown an example wherein a red-eye corrected image acquired after the automatic red-eye correction processing has been performed for the photographed image shown in Fig. 5 is displayed on the LCD panel 108 shown in Fig. 2, with the faces 411a, 421a and 431a of the three persons 411, 421 and 431, which have been corrected by the automatic red-eye correction processing, enclosed with a continuous circle 510, 520 and 530 for emphasis, and at the upper left of the LCD panel 108, the number of unconfirmed positions 610 is displayed, which is the number of persons who have not been confirmed by a confirmation operation to be described later, among the persons on which a red-eye portion has been detected. In the example shown in Fig. 6, "3" is displayed as the number of unconfirmed positions 610 at the upper left of the LCD panel 108, indicating that a red-eye portion has been detected and corrected for all the three persons 411, 421 and 431.

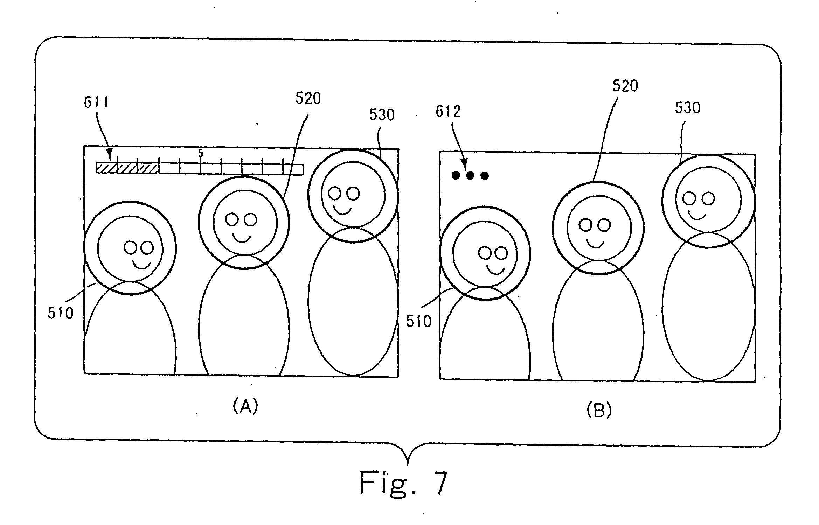

Fig. 7 shows display examples different from Fig. 6, wherein there are displayed a red-eye corrected image and the number of unconfirmed positions.

Though the number of unconfirmed positions 610 in Fig. 6 is expressed in a figure, the number of unconfirmed positions 611 shown in Part (A) of Fig. 7 is expressed as a bar, and the number of unconfirmed positions 612 shown in Part (B) is expressed as the number of dots. The number of unconfirmed positions can be expressed by means other than using a figure.

If the number of unconfirmed positions at which a red-eye portion has been detected but not confirmed is displayed together with the red-eye corrected image as described above, it is possible to easily confirm the red-eye portions without overlooking any red-eye portion even in the case of an image in which eyes of multiple persons are reproduced in red as shown in Fig. 6 by referring to the displayed number of unconfirmed positions. Furthermore, if faces with a red-eye portion in the red-eye corrected image are displayed in an emphasized condition, the red-eye portions in the red-eye corrected image can be confirmed more easily.

If, as a result of the confirmation of the red-eye portion, with the use of the red-eye corrected image acquired after the automatic red-eye correction processing has been performed, at step S104, the user determines that the red-eye portion has been appropriately detected and corrected, then, by pressing down the menu/OK switch 111 shown in Fig. 2 (step S105: YES), image data representing the red-eye corrected image is recorded into the recording medium 240 as a JPEG file via the medium controller 224 shown in Fig. 3 (step S112).

As described above, in the "first automatic red-eye correction processing" mode, after photographing has been performed by pressing down the shutter release button 105, confirmation of red-eye portions can be completed only by one operation of pressing down the menu/OK switch 111 at step S105. Thus, red-eye portions can be confirmed extremely easily.

If, as a result of the confirmation of the red-eye portion, with the use of the red-eye corrected image acquired after the automatic red-eye correction has been performed, at step S104, the user desires to confirm a red-eye portion by zooming a person' s face corrected by the automatic red-eye correction processing, then, by pressing down the cancellation switch 116 shown in Fig. 2 (step S105: NO), the face can be selected with the cross key 110 shown in Fig. 2 (step S106).

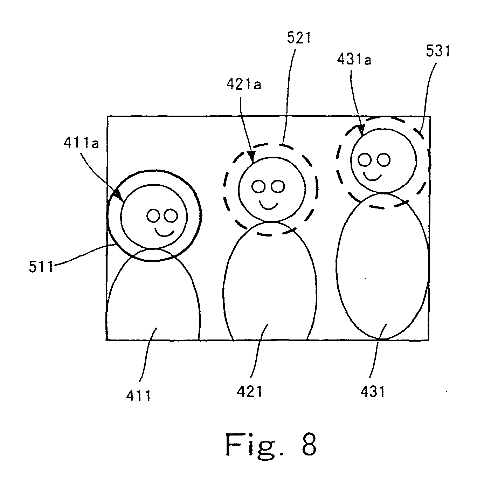

Fig. 8 shows a display example wherein there is displayed a red-eye corrected image, on which a face can be selected with a cross key at step S106, on a LCD panel.

Fig. 8 shows an example wherein a red-eye corrected image is displayed on the LCD panel 108 shown in Fig. 2, with the selected face 411a of the person 411 enclosed with a continuous-line circle 511 and with the faces 421a and 431a of the other persons 421 and 431, which can be selected with the cross key 110 shown in Fig. 2, enclosed with broken-line circles 521 and 531. The continuous-line circle 511 is moved to the face of another person based on the operation of the cross key 110 so that a desired face can be selected among the faces 411a, 421a and 431a of the persons 411, 421 and 431.

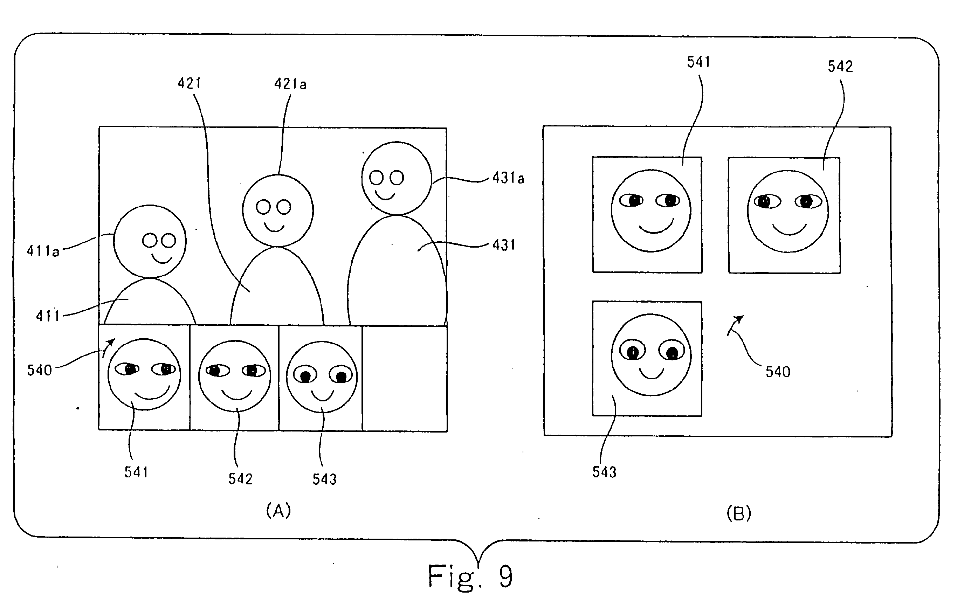

Fig. 9 shows display examples different from Fig. 8 wherein there are displayed red-eye corrected images on which a face can be selected at step S106.

In Part (A) of Fig. 9, there is shown a display example wherein faces 541, 542 and 543 corresponding to the faces 411a, 421a and 431a shown in Fig. 8, which can be selected with the cross key 110, are displayed as a list below the red-eye corrected image. In Part (B), there is shown a display example wherein only the faces 541, 542 and 543 are displayed as a list without display of the red-eye corrected image which is shown in Part (A). A pointer 540 is moved based on the operation of the cross key 110 so that a desired face can be selected among the faces 541, 542 and 543 displayed as a list. Thus, by displaying the faces 541, 542 and 543 corrected by the automatic red-eye correction processing as a list, the faces 541, 542 and 543 can be confirmed at a time. In this embodiment, description will be continued on the example wherein the red-eye corrected image is displayed as shown in Fig. 8 at step S106.

After a desired person's face is selected based on the operation of the cross key 110 shown in Fig. 2, the selected person's face is zoomed on the LCD panel 108 shown in Fig. 2 by pressing down the menu/OK switch 111 (step S107).

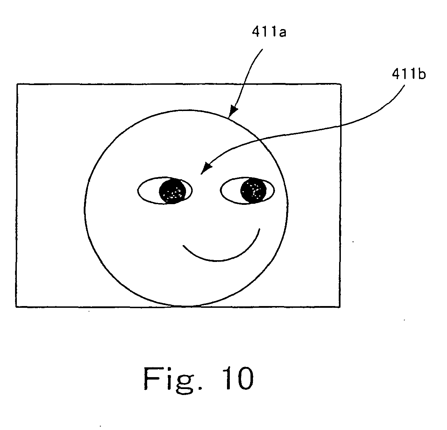

Fig. 10 shows a display example wherein a face zoomed at step S107 is displayed on a LCD panel.

There is shown an example wherein, by selecting the face 411a of the person 411, which is enclosed with the continuous circle 510, in the red-eye corrected image shown in Fig. 8 and then pressing down the menu/OK switch 111, the face 411a is zoomed on the LCD panel 108 shown in Fig. 2.

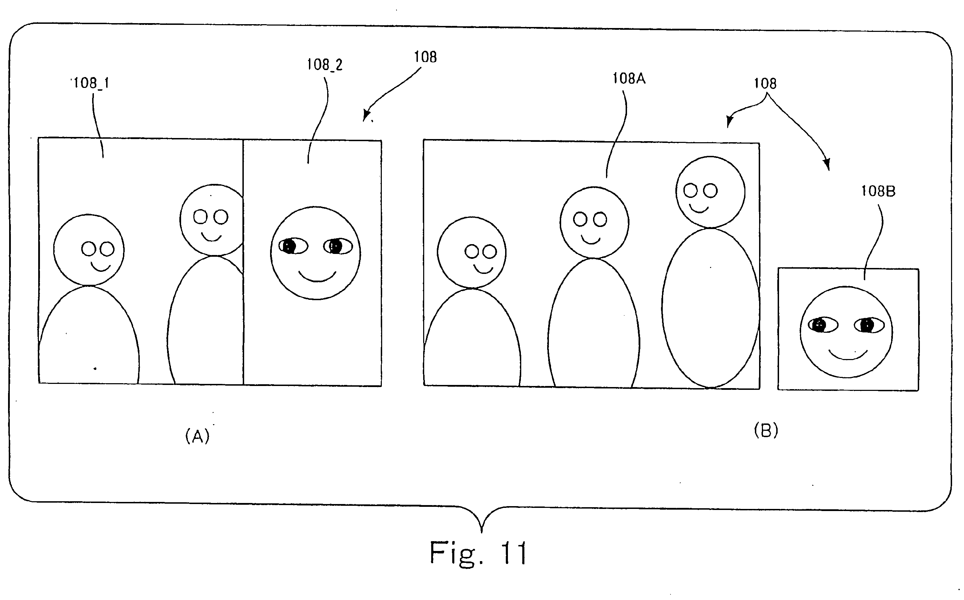

Fig. 11 shows display examples different from Fig. 10 wherein a zoomed face is displayed.

In Part (A) of Fig. 11, the LCD panel 108 is divided into two areas 108_1 and 108_2. The red-eye corrected image is displayed in the first area 108_1 and the selected face 411a is zoomed in the second area 108_2. By displaying the red-eye corrected image and the zoomed face side by side as described above, it is possible to easily confirm the positions at which red-eye correction has been performed. When there are provided two or more LCD panels, a photographed image may be displayed on one panel 108A and a zoomed face on the other panel 108B as shown in Part (B). In this embodiment, description will be made on the example wherein the zoomed face is displayed in a display manner as shown in Fig. 10, at step S107.

If, as a result of the confirmation of the red-eye portion for which the automatic red-eye correction processing has been performed, with the use of the face zoomed at step S107, the user determines that the red-eye portion has been appropriately detected and corrected, then, by a confirmation operation of pressing down the menu/OK switch 111 shown in Fig. 2 (step S108: YES), the automatic red-eye correction processing for the red-eye portion in the zoomed face is determined. The process then returns to step S104, where the whole image is displayed on the LCD panel 108 shown in Fig. 2. Every time the confirmation operation of step S108 is performed, the number of unconfirmed positions displayed at the upper left of the LCD panel 108 minus 1 (one) is newly displayed as the number of unconfirmed positions. After that, a person other than the person for whom the automatic red-eye correction processing has been determined can be selected according to the same procedure as described above.

An electronic camera in which the number of unconfirmed positions minus the number of confirmed positions makes it possible to certainly confirm red-eye portions in a red-eye corrected image by referring to the number of unconfirmed positions even if any red-eye portion has been overlooked.

If, as a result of the confirmation of the red-eye portions for which the automatic red-eye correction processing has been performed, with the use of the face zoomed at step S107, the user desires to further zoom the eye portion of the zoomed face for confirmation, then, by pressing down the cancellation switch 116 shown in Fig. 2 (step S108: NO), the zoomed eye portion is displayed on the LCD panel 108 shown in Fig. 2 (step S109).

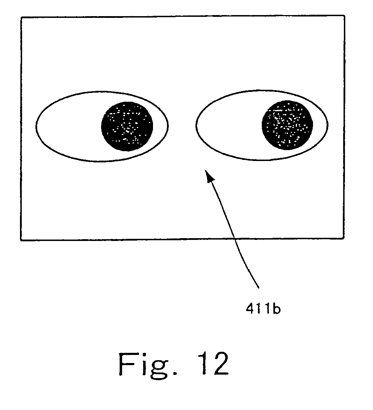

Fig. 12 shows a display example wherein an eye portion zoomed at step S109 is displayed on a LCD panel.

There is shown an example wherein an eye portion 411b of the zoomed face 411a shown in Fig. 10 is zoomed on the LCD panel 108 shown in Fig. 2.

Though, in this description of embodiments, cases wherein both eyes are zoomed have been described as an example of zooming an eye portion, one eye may be zoomed.

If, as a result of the confirmation of the red-eye portion for which the automatic red-eye correction processing has been performed, with the use of the eye portion zoomed at step S109, the user determines that the red-eye portion has been appropriately detected and corrected, then, by a confirmation operation of pressing down the menu/OK switch 111 shown in Fig. 2 (step S110: YES), the automatic red-eye correction processing for the red-eye portion of the zoomed face is determined. The process then returns to step S104, where the whole image is displayed on the LCD panel 108 shown in Fig. 2. Every time the confirmation operation of step S110 is performed, the number of unconfirmed positions displayed at the upper left of the LCD panel 108 minus 1 (one) is newly displayed as the number of unconfirmed positions. After that, a person other than the person for whom the automatic red-eye correction processing has been determined can be selected according to the same procedure as described above.

If, as a result of the confirmation of the red-eye portion for which the automatic red-eye correction processing has been performed, with the use of the eye portion zoomed at step S109, the user determines that the red-eye portion has been inappropriately detected or corrected, then, by pressing down the cancellation switch 116 shown in Fig. 2 (step S110: NO), the detection or correction of the red-eye portion for the zoomed eye portion is cancelled (step S111). The process returns to step S104, where the whole image is displayed on the LCD panel 108 shown in Fig. 2. Every time the confirmation operation of step S111 is performed, the number of unconfirmed positions displayed at the upper left of the LCD panel 108 minus 1 (one) is newly displayed as the number of unconfirmed positions. After that, a person other than the person for whom the automatic red-eye correction processing has been determined or cancelled can be selected according to the same procedure as described above.

Though there have been described examples wherein detection or correction is canceled when the user determines that a red-eye portion has been inappropriately detected or corrected, the present invention is not limited thereto and the corrected red-eye portion may be manually re-corrected.

In the processing mode described above, red-eye portions in a photographed image are detected; the detected red-eye portions are corrected; and a red-eye corrected image acquired after the red-eye portions are corrected is displayed. Therefore, the detected positions and the corrected result can be confirmed simultaneously at one time with the use of the red-eye corrected image. Furthermore, though operationality of switches provided for an electronic camera are generally not always good, red-eye portions are confirmed with the use of the corrected image acquired after the red-eye portions have been corrected in the electronic camera according to this embodiment, and accordingly the number of operations required for confirmation is reduced, and red-eye portions in an image can be easily confirmed even with a low-operationality switch.

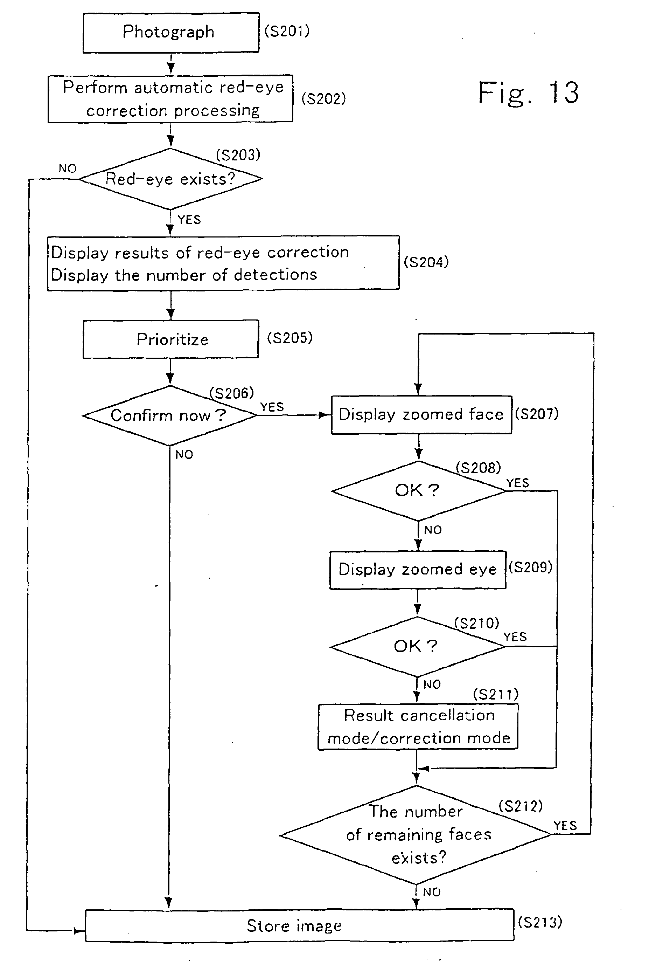

Fig. 13 is a flowchart showing an operational flow when a "second automatic red-eye correction processing" mode is selected.

First, by selecting the "photographing record" function by moving the function selection lever 113 shown in Fig. 2 to the "photographing record" side 113a; selecting a desired photographing mode by turning the photographing mode dial 112; selecting the "second automatic red-eye correction processing" mode based on the operation with the cross key 110; and then pressing down the shutter release button 105, photographing is performed (step S201).

When photographing is performed, the CPU 211 detects red-eye portions in a photographed image acquired by photographing at step S201 since the "second automatic red-eye correction processing" mode is selected based on the operation with the cross key 110 shown in Fig. 2. The CPU then starts the automatic red-eye correction processing for correcting the detected red-eye portions (step S202).

If red-eye portions have been detected at the detection of red-eyes in the photographed image at step S202 (step S203: YES), the number of persons on whom a red portion has been detected (hereinafter referred to as the number of detections) is displayed on the LCD panel 108 shown in Fig. 2 together with a red-eye corrected image acquired after the automatic red-eye correction processing has been performed (step S204).

If there is no red-eye portion detected in the detection of red-eye portions in the photographed image performed at step S202 (step S203: NO), then image data representing the photographed image is recorded into the recording medium 240 as a JPEG file via the medium controller 224 shown in Fig. 3 (step S213).

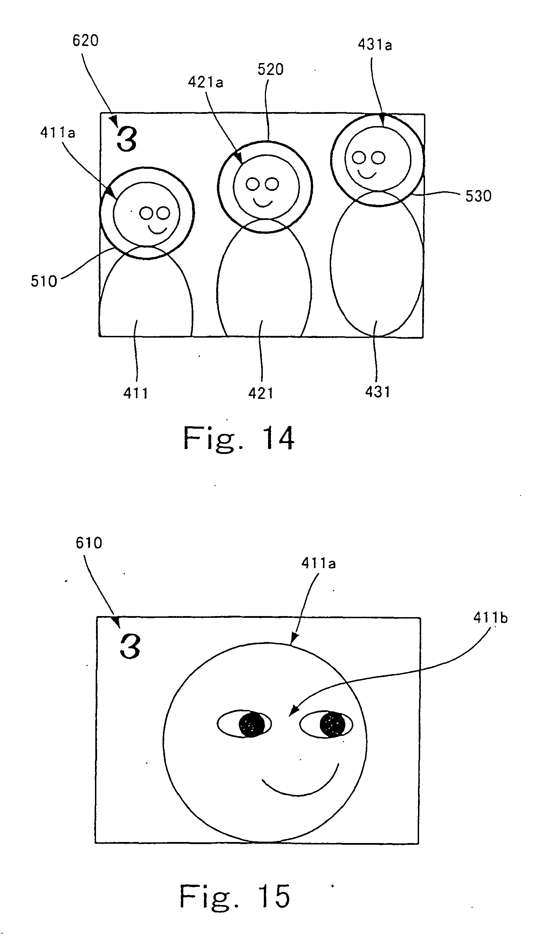

Fig. 14 shows a display example wherein there are displayed a red-eye corrected image for which automatic red-eye correction processing is performed at step S204 and the detected number on a LCD panel.

There is shown an example wherein a red-eye corrected image acquired after the automatic red-eye correction processing has been performed for the photographed image identical to the photographed image shown in Fig. 5, which has been acquired by photographing the three persons 410, 420 and 430 at step S201, is displayed on the LCD panel 108 shown in Fig. 2, with the faces 411a, 421a and 431a of the three persons 411, 421 and 431, which have been corrected by the automatic red-eye correction processing, enclosed with continuous circles 510, 520 and 530 for emphasis, and at the upper left of the LCD panel 108, the number of detections 620 is displayed, which is the number of detected red-eye portions. In the example shown in Fig. 14, "3" is displayed as the number of detections 620 at the upper left of the LCD panel 108, indicating that a red-eye portion has been detected and corrected for all the three persons 411, 421 and 431.

If the number of detections which is the number of detected red-eye portions in a red-eye corrected image is displayed together with the red-eye corrected image as described above, it is possible to easily confirm the red-eye portions without overlooking any red-eye portion even in the case of an image in which eyes of multiple persons are reproduced in red as shown in Fig. 14 by referring to the displayed number of detected positions. Furthermore, if faces with a red-eye portion in the red-eye corrected image is displayed in an emphasized condition, the red-eye portions in the red-eye corrected image can be confirmed more easily.

The CPU 211 then prioritizes the red-eye portions for which the automatic red-eye correction processing has been performed at step S202. In this embodiment, a "red-eye portion closer to the center of the angle of view" is given a higher priority first, and then a "red-eye portion with a larger area" is given a higher priority (step S205).

If, after the confirmation of the red-eye portions, with the use of the red-eye corrected image acquired after the automatic red-eye correction processing has been performed, at step S204, the user does not perform confirmation of the red-eye portions with the use of an image displaying a zoomed face or eye-portion, which is to be described later, then, by pressing down the cancellation switch 116 shown in Fig. 2 (step S206: NO), image data representing the red-eye corrected image is recorded into the recording medium 240 as a JPEG file via the medium controller 224 shown in Fig. 3 (step S213).

As described above, in the "second automatic red-eye correction processing" mode, after photographing has been performed by pressing down the shutter release button 105, confirmation of red-eye portions can be completed only by one operation of pressing down the cancellation switch 116 at step S206. Thus, confirmation of red-eye portions can be performed very easily.

If, as a result of the confirmation of the red-eye portions, with the use of the red-eye corrected image acquired after the automatic red-eye correction processing has been performed, at step S204, the user desires to confirm a red-eye portion by zooming the face of a person corrected by the automatic red-eye correction processing, then, by pressing down the menu/OK switch 111 shown in Fig. 2 (step S206: YES), the face of a person with a red-eye portion, which has been given the highest priority at step S205, among the persons displayed with their faces enclosed with a continuous circle for emphasis at step S204, is zoomed on the LCD panel 108 shown in Fig. 2 together with the number of unconfirmed positions (step S207). The number of unconfirmed positions here is the number of the persons who have not been confirmed by a confirmation operation to be described later, among the persons on which a red-eye portion has been detected, similarly to the number of unconfirmed positions explained in the description of the "first automatic red-eye correction processing" mode, and this number of unconfirmed positions is also an example of the number of positions according to the present invention.

An electronic camera in which the number of unconfirmed positions minus the number of confirmed positions is displayed makes it possible to certainly confirm red-eye portions in a red-eye corrected image by referring to the number of unconfirmed positions even when any red-eye portion has been overlooked.

Fig. 15 shows a display example wherein a face zoomed at step S207 and the number of unconfirmed positions are displayed on a LCD panel.

There is shown an example wherein the face 411a of the person 411, among the persons 411, 421 and 431 with their faces 411a, 421a and 431a enclosed with continuous circles 510, 520 and 530 in red-eye corrected images shown in Fig. 14, is zoomed on the LCD panel 108 shown in Fig. 2, and at the upper left of the LCD panel 108, the number of unconfirmed positions 610, which is the number of persons who have not been confirmed by a confirmation operation to be described later, among the persons on which a red-eye portion has been detected, is displayed.

If, as a result of the confirmation of the red-eye portion for which the automatic red-eye correction processing has been performed, with the use of the face zoomed at step S207, the user determines that the red-eye portion has been appropriately detected and corrected, then, by pressing down the menu/OK switch 111 shown in Fig. 2 (step S208: YES), the automatic red-eye correction processing for the red-eye portion in the zoomed face is determined. If there is any remaining person for whom the automatic red-eye correction processing has been performed and who was displayed at step S204 other than the person for whom the automatic red-eye correction has been determined (step S212: YES), then the face of a person with a red-eye portion with the highest priority among the persons except for the person for whom the automatic red-eye correction processing has been determined is zoomed on the LCD panel 108 shown in Fig. 2 (step S207). Every time the confirmation operation of step S208 is performed, the number of unconfirmed positions 610 displayed at the upper left of the LCD panel 108 minus 1 (one) is newly displayed as the number of unconfirmed positions.

If there is not any remaining person for whom the automatic red-eye correction processing has been performed and who was displayed at step S204 other than the person for whom the automatic red-eye correction processing for the red-eye portion in the face zoomed is determined in response to the YES operation at S208 or canceled by a "result cancellation" mode, which is to be described later (step S212: NO), then image data representing the red-eye corrected image determined by the YES operation at step S208 or canceled by the "result cancellation" mode to be described later is recorded into the recording medium 240 as a JPEG file via the medium controller 224 shown in Fig. 3 (step S213).

If, as a result of the confirmation of the red-eye portion for which the automatic red-eye correction processing has been performed, with the use of the face zoomed at step S207, the user desires to further zoom the eye portion of the zoomed face for confirmation, then, by pressing down the cancellation switch 116 shown in Fig. 2 (step S208: NO), the zoomed eye portion is displayed on the LCD panel 108 shown in Fig. 2 together with the number of unconfirmed positions (step S209).

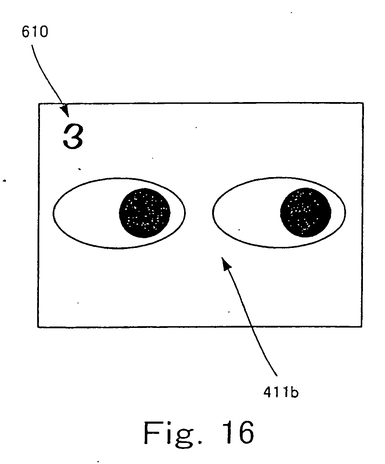

Fig. 16 shows a display example wherein an eye portion zoomed at S209 and the number of unconfirmed positions are displayed on a LCD panel.

There is shown an example wherein the eye portion 411b of the zoomed face 411a shown in Fig. 15 is zoomed on the LCD panel 108 shown in Fig. 2, and at the upper left of the LCD panel 108, the number of unconfirmed positions 610 is displayed, which is the number of persons who have not been confirmed by a confirmation operation to be described later, among the persons on which a red-eye portion has been detected.

Though, in this description of the embodiments, cases wherein both eyes are zoomed have been described as an example of zooming an eye portion, one eye may be zoomed.

If, as a result of the confirmation of the red-eye portion for which the automatic red-eye correction processing has been performed, with the use of the eye portion zoomed at step S209, the user determines that the red-eye portion has been appropriately detected and corrected, then, by a confirmation operation of pressing down the menu/OK switch 111 shown in Fig. 2 (step S210: YES), the automatic red-eye correction processing for the red-eye portion of the zoomed face is determined. If there is any remaining person for whom the automatic red-eye correction processing has been performed and who was displayed at step S204 other than the person for whom the automatic red-eye correction has been determined (step S212: YES), then the face of a person with a red-eye portion with the highest priority among the persons except for the person for whom the automatic red-eye correction processing has been determined is zoomed on the LCD panel 108 shown in Fig. 2 (step S207). Every time the confirmation operation of step S210 is performed, the number of unconfirmed positions 610 displayed at the upper left of the LCD panel 108 minus 1 (one) is newly displayed as the number of unconfirmed positions.

If there is not any remaining person for whom the automatic red-eye correction processing has been performed and who was displayed at step S204 other than the person for whom the automatic red-eye correction processing for the red-eye portion in the face zoomed is determined in response to the YES operation at S210 or canceled by the "result cancellation" mode, which is to be described later (step S212: NO), then image data representing the red-eye corrected image determined by the YES operation at step S210 or canceled by the "result cancellation" mode to be described later is recorded into the recording medium 240 as a JPEG file via the medium controller 224 shown in Fig. 3 (step S213).

The smaller the number of unconfirmed positions becomes, the lower the priority of the red-eye portion in the zoomed face of a person is. Therefore, if it is determined that the red-eye portion in the zoomed face is no more important after repeating the series of processings from step S207 to step S212, then the user can proceed to step S213 from the step S212 to record the red-eye corrected image by pressing down the cancellation switch 116 shown in Fig. 2.

If, as a result of the confirmation of the red-eye portion for which the automatic red-eye correction processing has been performed, with the use of the eye portion zoomed at step S209, the user determines that the red-eye portion has been inappropriately detected or corrected, then, the user presses down the cancellation switch 116 shown in Fig. 2 (step S210: NO)

When selecting the "second automatic red-eye correction processing" mode for the camera 100 of this embodiment to perform photographing, it is assumed that either the "result cancellation" mode for canceling detection or correction of a red-eye portion in a zoomed eye portion or the "correction" mode for enabling manual re-correction of the red-portion in the zoomed eye has been selected and set in advance. When either mode is set in advance, pressing down the cancellation switch 116 as the NO operation at step S210 causes automatic shift to the mode set in advance.

When the "result cancellation" mode is set, detection or correction of the red-eye portion in a zoomed eye is cancelled if the cancellation switch 116 is pressed down as the NO operation at step S210 (step S211). If there is any remaining person for whom the automatic red-eye correction processing has been performed and who was displayed at step S204 other than the person for whom the automatic red-eye correction has been canceled (step S212: YES), then the face of a person with a red-eye portion with the highest priority among the persons except for the person for whom the automatic red-eye correction processing has been determined is zoomed on the LCD panel 108 shown in Fig. 2 (step S207). Every time the confirmation operation of step S211 is performed, the number of unconfirmed positions 610 displayed at the upper left of the LCD panel 108 minus 1 (one) is newly displayed as the number of unconfirmed positions.

If the automatic red-eye correction processing for the red-eye portion in the zoomed face is cancelled at step S211, or if there is not any remaining person for whom the automatic red-eye correction processing has been performed and who was displayed at step S204 other than the person for whom determination has been performed by the confirmation operation described above (step S212: NO), then image data representing the red-eye corrected image cancelled at step S211 or determined by the confirmation operation described above is stored in the recording medium 240 as a JPEG file via the medium controller 224 shown in Fig. 3 (step S213).

When the "correction" mode is selected, inappropriate detection or correction such as displacement and unsuitable size can be manually re-corrected by pressing down the cancellation switch 116 as the NO operation at step S210.

In the first embodiment, there have been described examples wherein the red-eye correction processing and the work for confirming the processing is performed immediately after photographing. However, the series of processings including acquisition of a photographed image, red-eye correction processing and display of a corrected image may be performed for multiple photographed images and the work for confirming them may be collectively performed later, in an image correction apparatus and an image pickup apparatus of the present invention. When only the work of confirming the red-eye correction processing is performed for images collectively later, both of the original photographed images and corrected images for which the red-eye correction has been performed are stored, and unnecessary images are deleted after the confirmation work. In this case, only a part of an image, where a defect has occurred, may be stored instead of storing the whole image. Alternatively, correction information may be stored instead of an image. Having a smaller data size than an image, the correction information is advantageous in that it does not put much pressure on the capacity of a recording medium. As a method for storing the correction information, it is conceivable to embed the correction information into an eye portion where a defect has occurred as a tag information, into a margin portion where no image is arranged, or into the image as an electronic watermark.

The description of the first embodiment according to the present invention has been completed. A second embodiment of the present invention will be now described. A camera of this embodiment has a configuration similar to that of the camera 100 of the first embodiment shown in Figs. 1 to 3. Figs. 1 to 3 are also used to describe this embodiment, and only differences from the first embodiment are described.

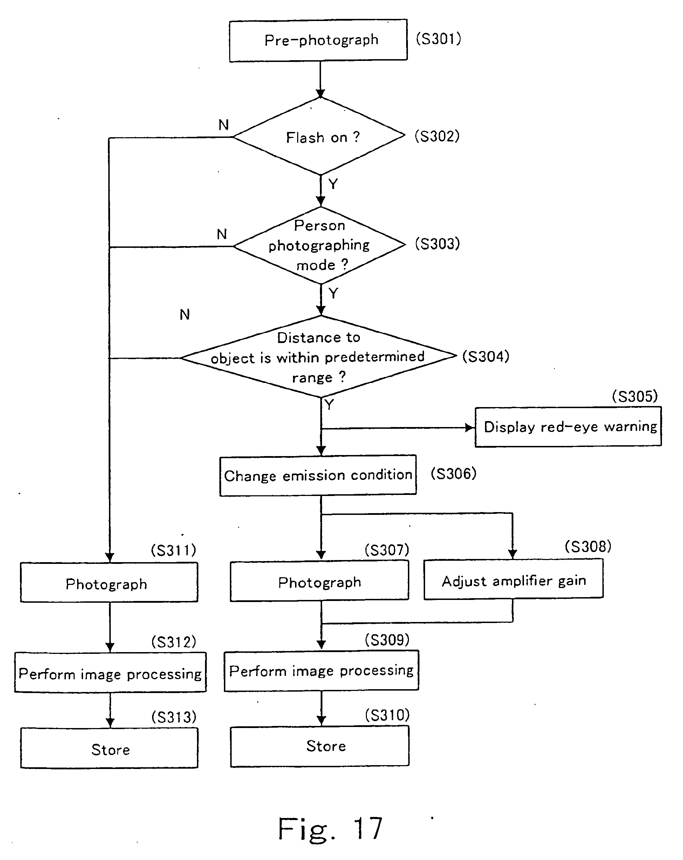

Fig. 17 is a flowchart showing a series of processings from photographing of an object with a camera according to a second embodiment to storage of a photographed image.

Similarly to the first embodiment, when the user adjusts the function selection lever 113 as shown in Fig. 2 to the "photographing record" side 113a first, a photographed object image is roughly read at predetermined time intervals by the CCD solid-state image pickup element 210 shown in Fig. 3, an RGB signal is outputted, and then the series of exposure processing and focusing processing are performed (pre-photographing at step S301).

The operator selects a mode ("person photographing" mode, "scenery photographing" mode, "sports" mode, "self timer" mode and "self photographing" mode) using the photographing mode dial 112 shown in Fig. 2. Furthermore, when performing flash photographing accompanied by a flash, a flash button (not shown) is pressed down to specify flash photographing. The pressed down condition of the photographing mode dial 112 and the flash button is sent to the CPU 211.

If the flash button is not pressed down (step S302: NO), then it is presumed that a red-eye defect will not occur in a photographed image in the CPU 211, and the process proceeds to step S311 from step S302 in the flowchart of Fig. 17.

When the user presses down the shutter release button 105, the CPU 211 detects the shutter release button 105 being pressed down. The CPU 211 directs the timing generator 212 to start photographing and the photographed object image is read in detail by the CCD solid-state image pickup element 210 to perform the photographing processing similar to that performed at step S101 in Fig. 4 is performed (step S311).

The image signal processing circuit 222 performs a predetermined image processing, such as a gradation correction processing, for image data acquired by photographing. The image data for which the image processing has been performed is recorded into the recording medium 240 (step S313 in Fig. 17). Since the image processing such as a gradation correction processing has been traditionally broadly performed, description thereof is omitted herein.

Eye-related defects such as red-eyes usually do not occur easily when flash photographing is not performed. Accordingly, when flash photographing is not performed, it is possible to speed up processings by omitting the red-eye correction processing.

If the user presses down the flash button (step S302: YES) and a mode other than the "person photographing" mode is selected (step S303: NO), then the CPU 211 also presumes that a red-eye defect will not occur in a photographed image, and the process then proceeds to step S311 from step S303 in the flowchart to perform photographing.

If the user presses down the flash button (step S302: YES), the "person photographing" mode is selected (step S303: YES), and the distance to the vicinity of the center of the angle of view (distance to the object), which is calculated by the focusing processing during the pre-photographing at step S301, is beyond a predetermined range (step S304: NO), then the CPU 211 also presumes that a red-eye defect will not occur in a photographed image, and the process then proceeds to step S311 from step S304 in the flowchart to perform photographing.

When the distance to the object is beyond a predetermined range, for example, when it is too short or too long, the possibility that a red-eye defect occurs is low even if there is a person in a photographed image. In this embodiment, when a mode other than the "person photographing" mode ("scenery photographing" mode, "sports" mode, "self timer" mode or "self photographing" mode) is selected as the mode, it is presumed that there is no person in a photographed image or that the distance to the object is beyond a predetermined range even if there is any person photographed, and therefore the red-eye correction processing is omitted. In this embodiment, the "person photographing" mode is initially selected. Therefore, if the user performs photographing without regard to the mode, the "person photographing" mode is selected (step S303: YES) and photographing that prevents red-eye defect from occurring, which will be described later, is performed. In the case of a camera for which a mode other than the "person photographing" mode is initially selected or a camera with an auto mode in which the camera automatically selects a suitable mode, if either the condition that "'the person photographing' mode is selected (step S303)" or the condition that "the distance to the object is within a predetermined range (step S304)" is true, then the process may proceed to the photographing process at and after step S305 for preventing a red-eye defect from occurring.

If the user presses down the flash button (step S302: YES), the "person photographing" mode is selected as the mode (step S303: YES), and the distance to the object is within a predetermined range (step S304: YES)., then the CPU 211 presumes that a red-eye defect will occur in a photographed image. In this case, the CPU 211 causes a warning to be disaplayed on the LCD panel 108 shown in Fig. 2, indicating that "a red-eye will occur" (step S305). By receiving the warning, the user can certainly recognize that "a red-eye may occur".

Furthermore, the CPU 211 directs the flash emitting device 103 shown in Fig. 3 to adjust the emission strength and the emission period of the flash emitting device 103 to predetermined values at which a red-eye will not easily occur (step S306).

When the flash emitting device 103 has been adjusted and the user presses down the shutter release button 105, the CPU 211 detects the shutter release button 105 being pressed down and performs a photographing processing accompanied by a flash (step S307). In image data acquired by the photographing process at step S307, red-eyes are prevented from occurring.

The CPU 211 directs the CDSAMP 213 to adjust the gain of an amplifier (step S308).

The image processing similar to that performed at step S312 is performed for the image data acquired by photographing (step S309), and the image data for which the image processing has been performed is recorded into the recording medium 240 (step S310).

By making a presumption on whether or not a defect such as red-eyes will occur in advance based on photographing conditions such as a photographing mode, with or without a flash, distance to the object and the like, and adjusting emission of the flash emitting device when it is presumed that a defect will occur, occurrence of red-eyes can be reduced.

In this embodiment, occurrence of red-eyes is reduced and therefore confirmation of photographed images is not performed. However, if a warning is issued, confirmation may be performed to make sure.

The description of the second embodiment according to the present invention has been completed. A third embodiment of the present invention will be now described. A camera of this embodiment also has a configuration similar to that of the camera 100 of the first embodiment shown in Figs. 1 to 3. Figs. 1 to 3 are also used to describe this embodiment, and only differences between the first and second embodiments are described.

In the camera of this embodiment, the shutter release button 105 shown in Fig. 1 can be pressed down at two stages. By pressing the button at the first stage, the pre-photographing (the exposure processing and the focusing processing) is performed. By pressing the button at the second stage, the actual photographing processing is performed.

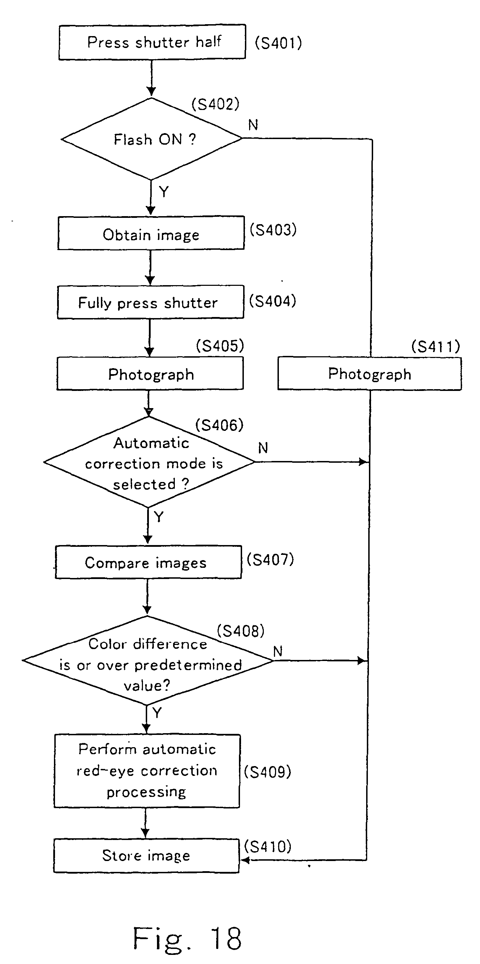

Fig. 18 is a flowchart showing a series of processings from photographing of an object with a camera according to the third embodiment to storage of a photographed image.

First, the user selects a mode ("person photographing" mode, "scenery photographing" mode, "sports" mode, "self timer" mode and "self photographing" mode) using the photographing mode dial 112 shown in Fig. 2. Furthermore, when performing flash photographing accompanied by a flash, the user presses down a flash button (not shown) to specify flash photographing. Furthermore, when performing the automatic red-eye correction processing, the user selects the "automatic red-eye correction processing" mode (for detecting red-eye portions in a photographed object image and correcting the detected red-eye portions) with the cross key 110 . The setting condition of the cross key 110, the photographing mode dial 112 and the flash button is sent to the CPU 211.

The user then points the camera to a desired object to be photographed and presses down the shutter release button 105 at the first stage (step S401).

If flash photographing is not selected with the flash button (step S402 in Fig. 18: NO), the photographing processing not accompanied by a flash, similar to that performed at step S310 in Fig. 17, is performed (step S411), and image data acquired by the photographing processing is recorded into the recording medium 240 (step S410). Eye-related defects such as red-eyes seldom occur in an image photographed without a flash, and therefore the red-eye correction processing can be omitted.

If flash photographing is selected with the flash button (step S402 in Fig. 18: YES), the pre-photographing similar to that performed at step S301 in Fig. 17 is performed inside the camera, and image data with rough pixels (hereinafter referred to as low-resolution data) is acquired without a flash from the flash emitting device 103 (step S403). This low-resolution data is an example of first image data according to the present invention, and a low-resolution image represented by the low resolution data is an example of a first image according to the present invention.

The user then presses down the shutter release button 105 at the second stage to direct photographing (step S404).

The photographing processing accompanied by a flash, similar to that performed at step S307 in Fig. 7, is performed inside the camera, and image data with fine pixels (hereinafter referred to as high-resolution data) is acquired (step S405.) The high-resolution data is an example of second resolution data according to the present invention, and a high-resolution image represented by the high-resolution data is an example of a second image according to the present invention.

If the "automatic red-eye correction processing" mode is not selected (step S406: NO), the red-eye correction processing is not performed, and the acquired high-resolution data is recorded into the recording medium 240 (step S410).

If the "automatic red-eye correction processing" mode is selected (step S406: YES), the image signal processing circuit 222 compares colors in the low-resolution image represented by the low-resolution data acquired at step S403 and colors in the high-resolution image represented by the high-resolution data acquired at step S405 (step S407). In this embodiment, hue difference between the high-resolution image and the low-resolution image is acquired by the image signal processing circuit 222.

If the hue difference acquired at step S407 is below a predetermined value (step S408: NO), it is presumed that there is no red-eye caused in the high-resolution image, the high-resolution image data is recorded into the recording medium 240 without the red-eye correction processing being performed by the image signal processing circuit 222 (step S410). Since the low-resolution image has been acquired without a flash, the possibility of occurrence of red-eyes is low. On the other hand, the high-resolution image has been acquired with a flash, and therefore possibility of occurrence of red-eyes is high. However, the difference between the colors of the high-resolution image and those of the low-resolution image is below the predetermined value, it is determined that no red-eye has been occurred.

If the hue difference acquired at step S407 is equal to or above the predetermined value (step S408: YES), the image signal processing circuit 222 considers that a defect has occurred at positions in the high-resolution image at which the hue difference is equal to or above the predetermined value. If the lightness difference at a position in the high-resolution image at which a defect has occurred is significantly different from that in the part around the position, the defect at the position can be considered to be a gold-eye defect, and the hue difference or the saturation difference at the position is significantly different from that in the part around the position, the defect at the position can be considered to be a red-eye defect.

When a defect is detected, the automatic red-eye correction processing similar to that performed at step S102 in Fig. 4 is performed for the high-resolution data (step S409). After confirmation is performed for the red-eye portions, the image data for which the automatic red-eye correction processing has been performed is recorded into the recording medium 240 (step S410).

By performing the red-eye correction processing only when it is presumed in advance that a red-eye defect will occur in a photographed image, the burden of processing can be reduced and the confirmation work for red-eye corrected images can be also reduced.

Though, this embodiment has been described with an example wherein the present invention is applied to an electronic camera in which an image of a photographed object is focused on a CCD solid-state image pickup element to acquire image data representing the photograph object as a signal, the present invention is not limited thereto. The present invention can also be applied to an image correction apparatus for detecting a particular eye-related defect in an image represented by acquired image data, correcting the detected defect and displaying the number of positions at which the defect has been detected together with the image including the positions, which is realized, for example, by a personal computer.

Though, in this description of the embodiments, there have been shown examples wherein the automatic red-eye correction processing is performed in response to the "first automatic red-eye correction processing" mode or the "second automatic red-eye correction processing" mode being selected, the automatic red-eye correction processing may be always performed after photographing or after photographing with a flash.

In the above description, there have been shown examples wherein the red-eye correction processing and the work for confirming the processing are performed immediately after photographing. However, in an image correction apparatus and an image pickup apparatus of the present invention, multiple photographed images may be acquired first, and the red-eye correction processing and the work for confirming the processing may be performed for the images collectively later. When only the work for confirming the red-eye correction processing is performed for images collectively, both of the original photographed images and corrected images for which the red-eye correction has been performed are stored and unnecessary images are deleted after the confirmation work. In this case, instead of storing the whole image, only a part of the image where a defect has occurred may be stored. Alternatively, correction information may be stored instead of an image.

There was described an example wherein a warning to the effect that a defect will occur is displayed on the image display section. However, a warning according to the present invention may be displayed on a finder and the like which the user looks into.

There was described an example wherein a warning to the effect that a defect will occur is displayed on an image display section. However, a warning according to the present invention may be issued by voice.

There was described an example of a warning section for issuing a warning to the effect that a defect will occur. However, a warning section according to the present invention may issue a notification to the effect that the correction processing will work in conjunction with a photographing mode, for example, when the automatic red-eye correction processing mode is set, or may issue an advice to set the automatic red-eye correction processing mode when flash photographing is set without setting the automatic red-eye correction processing mode.

There was described an example wherein a presumption is made on whether or not a defect has occurred in a photographed image based on difference between colors in a first image acquired without a flash and colors in a second image acquired with a flash. However, an image correction apparatus and an image pickup apparatus according to the present invention may emit a flash even during pre-photographing and detect red-eyes or issue a warning based on low-resolution data acquired by the pre-photographing. By detecting red-eyes with the use of low-resolution data acquired by pre-photographing, the processings are distributed and time required for the red-eye correction processing after actual photographing can be shortened.

In this description of the embodiments, there have been described examples wherein red-eye portions in a photographed image are detected and the detected red-eye portions are corrected, the present invention is not limited thereto, and a particular eye-related defect, such as a gold-eye portion, may be detected and the detected defect may be corrected.

In this description of the embodiments, "the number of unconfirmed positions" indicating the number of persons for whom a red-eye portion has been detected is shown as an example of "the number of positions". However, "the number of positions" according to the present invention may be, for example, the number of eyes for which a defect such as a red-eye portion has been detected.

There was described an example wherein the number of positions at which a defect has been detected is displayed. However, an image display section according to the present invention may display, for each of levels of a defect, the number of positions at which the defect of the level has occurred.

In this description of the embodiments, there have been used examles wherein the number of positions in a photographed image at which a red-portion has been detected is displayed together with a red-eye corrected image including the positions, which has been acquired after the red-eye portions in the photographed image have been detected and corrected. However, the present invention is not limited thereto, and the number of positions in a photographed image at which a red-eye portion has been detected may be displayed together with the photographed image including the positions, which has been acquired before the red-eye portions in the photographed image have been detected and corrected.

## Claims

1. An image correction apparatus comprising:
an image acquisition section that acquires image data representing an image;
a correction section that automatically detects an eye-related defect in the image represented by the image data acquired by the image acquisition section and corrects the detected defect; and
an image display section that displays an image based on the image data,
wherein the image display section, when the image data is acquired by the image acquisition section, displays a corrected image in which the defect has been corrected by the correction section, and **characterized in that** the image display section, when a corrected image is displayed, simultaneously displays a list of image portions from positions at which the defect has been detected by the correction section and at which automatic correction has taken place.

2. The image correction apparatus according to claim 1, wherein the correction section not only detects the defect in the image but also prioritizes positions at which the defect has been found based on a predetermined criteria, and
wherein the image display section, when displaying the corrected image, displays in preference an image portion from a position to which a higher priority has been given by the correction section.

3. The image correction apparatus according to claim 1, wherein the image display section, when displaying the corrected image, displays a normal image in which none of the image portions from positions at which the defect has been detected by the correction section is zoomed and a zoomed image in which at least one of the image portions is zoomed.

4. The image correction apparatus according to claim 1, further comprising a correction cancellation section that restores the defect corrected by the correction section, in the corrected image displayed by the image display section, to the original condition held before the defect is corrected by the correction section.

5. The image correction apparatus according to claim 1, wherein the image display section, when displaying the corrected image, emphasizes the defect corrected by the correction section.

6. The image correction apparatus according to claim 1, wherein the correction section detects red-eye portions in the image and corrects the detected red-eye portions, and
wherein the image display section, when the image data is acquired by the image acquisition section, displays a corrected image in which the red-eye portions have been corrected by the correction section.

7. An image pickup apparatus that forms a photographed object image by light of the photographed object sent via a photographing optical system onto a solid-state image pickup element to acquire image data representing the photographed object image; the image pickup apparatus comprising the image correction apparatus of any of claims 1 to 6.

## Patentansprüche

1. Bildkorrekturvorrichtung, umfassend:
einen Bilderfassungsteil, der ein Bild repräsentierende Bilddaten erfasst; einen Korrekturteil, der automatisch einen Augen-bezogenen Defekt in dem durch die von dem Bilderfassungsteil erfassten Bilddaten repräsentierten Bild detektiert und den detektierten Defekt korrigiert; und
einen Bildanzeigeteil, der basierend auf den Bilddaten ein Bild anzeigt, wobei der Bildanzeigeteil dann, wenn die Bilddaten von dem Bilderfassungsteil erfasst werden, ein korrigiertes Bild zur Anzeige bringt, in welchem der Defekt von dem Korrekturteil korrigiert wurde, **dadurch gekennzeichnet, dass** der Bildanzeigeteil dann, wenn ein korrigiertes Bild angezeigt wird, gleichzeitig eine Liste von Bildteilen aus Stellen anzeigt, an denen der Defekt von dem Korrekturteil detektiert wurde, und wo eine automatische Korrektur stattgefunden hat.

2. Vorrichtung nach Anspruch 1, bei der der Korrekturteil nicht nur den Defekt in dem Bild detektiert, sondern auch Stellen, an denen der Defekt aufgefunden wurde, aufgrund eines vorbestimmten Kriteriums mit Priorität versieht, und wobei der Bildanzeigeteil beim Anzeigen des korrigierten Bilds vorzugsweise einen Bildteil aus einer Stelle zur Anzeige bringt, welcher von dem Korrekturteil eine höhere Priorität zugewiesen wurde.

3. Vorrichtung nach Anspruch 1, bei der der Bildanzeigeteil beim Anzeigen des korrigierten Bilds ein normales Bild anzeigt, in welchem keiner der Bildteile aus Stellen, an denen der Defekt von dem Korrekturteil detektiert wurde, gezoomt ist, und ein gezoomtes Bild anzeigt, in welchem zumindest einer der Bildteile gezoomt ist.

4. Vorrichtung nach Anspruch 1, weiterhin umfassend einen Korrekturaufhebungsteil, der den von dem Korrekturteil korrigierten Defekt in dem von dem Bildanzeigeteil angezeigten korrigierten Bild wiederherstellt in den Ausgangszustand, der vorherrschte, bevor der Defekt von dem Korrekturteil korrigiert wurde.

5. Vorrichtung nach Anspruch 1, bei der der Bildanzeigeteil beim Anzeigen des korrigierten Bilds den von dem Korrekturteil korrigierten Defekt hervorhebt.

6. Vorrichtung nach Anspruch 1, bei der der Korrekturteil Rotaugenbereiche in dem Bild detektiert und die detektierten Rotaugenbereiche korrigiert, und der Bildanzeigeteil dann, wenn die Bilddaten von dem Bilderfassungsteil erfasst werden, ein korrigiertes Bild anzeigt, in welchem die Rotaugenbereiche von dem Korrekturteil korrigiert sind.

7. Bildaufnahmevorrichtung, die ein Aufnahmeobjektbild mit Hilfe von Licht des photographierten Objekts bildet, welches über eine Aufnahmeoptik auf ein Festkörper-Bildaufnahmeelement geleitet wurde, um Bilddaten zu erfassen, die das Aufnahmeobjektbild repräsentieren, wobei die Bildaufnahmevorrichtung die Bildkorrekturvorrichtung nach einem der Ansprüche 1 bis 6 enthält.

## Revendications

1. Appareil de correction d'image comprenant :
une section d'acquisition d'image qui acquiert des données d'image représentant une image ;
une section de correction qui détecte automatiquement un défaut lié aux yeux dans l'image représentée par les données d'image acquises par la section d'acquisition d'image et corrige le défaut détecté ; et
une section d'affichage d'image qui affiche une image sur la base des données d'image,
dans lequel la section d'affichage d'image, lorsque les données d'image sont acquises par la section d'acquisition d'image, affiche une image corrigée dans laquelle le défaut a été corrigé par la section de correction, et **caractérisé en ce que** la section d'affichage d'image, lorsqu'une image corrigée est affichée, affiche simultanément une liste des parties d'image des positions auxquelles le défaut a été détecté par la section de correction et auxquelles une correction automatique a eu lieu.

2. Appareil de correction d'image selon la revendication 1, dans lequel la section de correction non seulement détecte le défaut dans l'image, mais classe également par priorité les positions auxquelles le défaut a été trouvé sur la base d'un critère prédéterminé, et
dans lequel la section d'affichage d'image, lorsqu'elle affiche l'image corrigée, affiche de préférence une partie d'image d'une position à laquelle une priorité supérieure a été donnée par la section de correction.

3. Appareil de correction d'image selon la revendication 1, dans lequel la section d'affichage d'image, lorsqu'elle affiche l'image corrigée, affiche une image normale dans laquelle aucune des parties d'image des positions auxquelles le défaut a été détecté par la section de correction n'est zoomée et une image zoomée dans laquelle au moins une des parties d'image est zoomée.

4. Appareil de correction d'image selon la revendication 1, comprenant en outre une section d'annulation de correction qui rétablit le défaut corrigé par la section de correction, dans l'image corrigée affichée par la section d'affichage d'image, dans l'état d'origine retenu avant la correction du défaut par la section de correction.

5. Appareil de correction d'image selon la revendication 1, dans lequel la section d'affichage d'image, lorsqu'elle affiche l'image corrigée, accentue le défaut corrigé par la section de correction.

6. Appareil de correction d'image selon la revendication 1, dans lequel la section de correction détecte des parties d'yeux rouges dans l'image et corrige les parties d'yeux rouges détectées, et
dans lequel la section d'affichage d'image, lorsque les données d'image sont acquises par la section d'acquisition d'image, affiche une image corrigée dans laquelle les parties d'yeux rouges ont été corrigées par la section de correction.

7. Appareil de capture d'image qui forme une image d'objet photographié par la lumière de l'objet photographié envoyée au moyen d'un système optique photographique sur un élément de capture d'image à semi-conducteurs pour acquérir des données d'image représentant l'image d'objet photographié ; l'appareil de capture d'image comprenant l'appareil de correction d'image selon l'une quelconque des revendications 1 à 6.
